# EUROPEAN PATENT SPECIFICATION

(11) **EP 2 284 798 B1**
(45) Date of publication and mention of the grant of the patent: **28.03.2012**
(21) Application number: 10168572.5
(22) Date of filing: 06.07.2010
(51) Int. Cl.: G06T 11/00, G06T 11/60

(54) **Method and apparatus for virtual object based image processing**
Verfahren und Vorrichtung für die virtuelle objektbasierte Bildverarbeitung
Procédé et appareil de traitement d'image basé sur un objet virtuel

(30) Priority: 13.07.2009 KR 20090063450
(43) Date of publication of application: 16.02.2011
(73) Proprietor: Samsung Electronics Co., Ltd., Gyeonggi-do 506-762 (KR)
(72) Inventor: Kim, Hee Woon, Gyeonggi-do (KR); Shin, Dong Jun, Gyeonggi-do (KR); Kim, Jin Yong, Gyeonggi-do (KR); Na, Su Hyun, Gyeonggi-do (KR)
(74) Representative: Jenkins, Richard Gavin

(56) References cited:
- DE-A1-102007 045 834
- JP-A- 2007 272 847
- KR-B1- 100 757 986
- US-A- 5 963 214
- US-A1- 2005 069 223

## Description

### BACKGROUND OF THE INVENTION

### Field of the Invention

The present invention relates to a mobile device and, more particularly, to a virtual object based image processing method and apparatus in which a selected virtual object is overlapped with a specific image to support a user-friendly function.

### Description of the Related Art

Nowadays a mobile device supports a great variety of user-friendly functions to meet a customer's increasing demands. Such a mobile device today has come to be used widely owing to its convenience of use and portability.

Normally a mobile device is equipped with special modules to perform particular functions. For instance, an MP3 player module for playing a digital audio file, a camera module for recording a digital image file, and the like, are typically used for mobile devices.

A conventional mobile device equipped with a camera module inherently supports a preview function to output an image being obtained by a camera module on a display unit, and a memory function to store an image obtained at a user's request in a memory unit.

Such a conventional mobile device merely allows a camera module to capture and record the image of a focused target just the way it is. Namely, a conventional mobile device may have a limit in capturing and recording a variety of images a user desires.

US 5,963,214 describes a method of combining at least one captured generated digital image with at least one prestored digital image. A prestored digital image having a predetermined location where a captured customer generated digital image may be placed is selected for merging with a digital customer generated image. The location of the prestored image has a predetermined visual aspect. The customer generated image is automatically modified in accordance with a predetermined visual aspect and merged into the prestored image so as to form a merged digital image.

DE 10 2007 045 834 describes a method for illustrating a virtual object in a real environment, comprising the following steps: generating a two-dimensional illustration of a real environment by means of a recording device, determining a position of the recording device relative to at least one component of the real environment, segmenting at least one region of the real environment in the two-dimensional image on the basis of non-manually generated 3D information for identifying at least one segment of the real environment as a way of outlining the same as opposed to the remaining part of the real environment by providing corresponding segmenting data, and mixing the two-dimensional image of the real environment with the virtual object, or by means of an optical, semi-permeable element, directly with the reality in consideration of the segmenting data. Using the invention, occurring collisions of virtual objects with real objects can be illustrated in a virtually realistic fashion during the mixing with a real environment.

US 2005/0069223 describes an image combining method for combining an image obtained by image sensing real space with a computer-generated image and displaying the combined image. Mask area color information is determined based on a first real image including an object as the subject of mask area and a second real image not including the object, and the color information is registered. The mask area is extracted from the real image by using the registered mask area color information, and the real image and the computer-generated image are combined by using the mask area.

### BRIEF SUMMARY OF THE INVENTION

Accordingly, the present invention is to address the above-mentioned problems and/or disadvantages and to offer at least the advantages described below.

An aspect of the present invention is to provide an image processing method and apparatus based on a virtual object in order to support a user-friendly function by allowing overlap of a selected virtual object on an image, such as a preview image.

According to one aspect of the present invention, provided is a method for image processing, operable in a control unit, based on a virtual object, the method comprising: selecting at least one virtual object, each virtual object including a virtual image and a modification attribute, the virtual image having a particular form and being placed on a specific underlying image, and the modification attribute allowing at least one part of the underlying image to be modified; creating a merged image by locating the selected virtual object on a specific position of the underlying image and by modifying the at least one part of the underlying image according to the modification attribute; and outputting the merged image.

According to another aspect of the present invention, provided is an apparatus for image processing based on a virtual object, the apparatus comprising: a memory unit configured to store at least one virtual object, each virtual object including a virtual image and a modification attribute, the virtual image having a particular form and is placed on a specific underlying image, and the modification attribute allowing at least one part of the underlying image to be modified; a control unit configured to create a merged image by locating the at least one selected virtual object on a specific position of the underlying image, to modify the at least one part of the underlying image according to the modification attribute, and to output the merged image; an input unit configured to create at least one of an input signal for selecting at least one of the at least one virtual object and an input signal for selecting the underlying image; and a display unit configured to display the merged image.

Therefore, according to aspects of this invention, a user of the mobile device can easily obtain various images decorated with a selected virtual object by checking in advance images overlapped with a virtual object before saving them.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

FIG. 1 is a block diagram illustrating the configuration of a mobile device in accordance with an exemplary embodiment of the present invention.
FIG. 2 is a view illustrating a detailed configuration of a control unit shown in FIG. 1.
FIG. 3 is a view illustrating an example of a merged preview image with a candlelight virtual object in accordance with an exemplary embodiment of the present invention.
FIG. 4 is a view illustrating an applicable example of a candlelight virtual object shown in FIG. 3.
FIG. 5 is a view illustrating an example of a merged preview image with a bubble virtual object in accordance with another exemplary embodiment of the present invention.
FIG. 6 is a view illustrating an applicable example of a bubble virtual object shown in FIG. 5.
FIG. 7 is a flow diagram illustrating an image processing method based on a virtual object in accordance with an exemplary embodiment of the present invention.

### DETAILED DESCRIPTION OF THE INVENTION

Exemplary, non-limiting embodiments of the present invention will now be described more fully with reference to the accompanying drawings. This invention may, however, be embodied in many different forms and should not be construed as limited to the exemplary embodiments set forth herein. Rather, the disclosed embodiments are provided so that this disclosure will be thorough and complete, and will convey the scope of the invention to those skilled in the art. The principles and features of this invention may be employed in varied and numerous embodiments without departing from the scope of the invention.

Furthermore, well known or widely used techniques, elements, structures, and processes may not be described or illustrated in detail to avoid obscuring the essence of the present invention. Although the drawings represent exemplary embodiments of the invention, the drawings are not necessarily to scale and certain features may be exaggerated or omitted in order to better illustrate and explain the present invention.

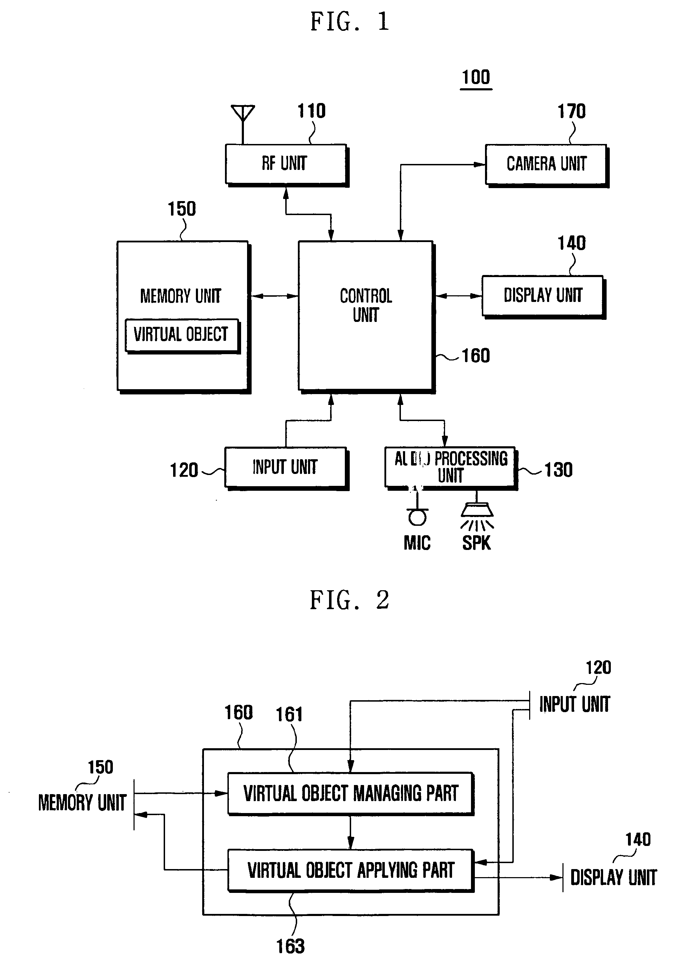

FIG. 1 is a block diagram illustrating the configuration of a mobile device in accordance with an exemplary embodiment of the present invention.

Referring to FIG. 1, the mobile device 100 according to an embodiment of this invention includes a radio frequency (RF) unit 110, an input unit 120, an audio processing unit 130, a display unit 140, a memory unit 150, a camera unit 170, and a control unit 160.

An image set forth in the following descriptions is a preview image obtained by the camera unit 170. This is, however, exemplary only and not to be considered as a limitation of the present invention. Alternatively, any other type of images, such as images stored in the mobile device or images received from external entities, may be used for the present invention.

The mobile device 100 having the above-listed elements applies a selected specific virtual object to a preview image obtained by the camera unit 170 and then outputs a merged image comprising the preview image and a virtual object to the display unit 140. Therefore, when a user tries to obtain an image of a desired target, the mobile device 100 allows a user to check, in advance, how a selected virtual object affects a current image of a desired target. Also, a user can determine whether to obtain a current image to which a selected object image is applied. Now, each element of the mobile device 100 will be described in detail.

The RF unit 110 establishes communication channels with a base station (not shown) to perform a data communication and a voice call with other mobile devices. Also, the RF unit 110 may include an RF transmitter (not shown) which up-converts the frequency of signals to be transmitted and amplifies the signals, and an RF receiver (not shown), which amplifies received signals and down-converts the frequency of the received signals. Particularly, under the control of the control unit 160, the RF unit 110, according to an embodiment of this invention, may transmit images obtained by the camera unit 170 to other mobile devices or devices capable of receiving RF transmissions. In case where the mobile device 100 does not support a communication function, the RF unit 110 may be omitted from the mobile device 100.

The input unit 120 includes a plurality of normal input keys and special function keys (not shown) that are configured to receive user's instructions. The function keys may have navigation keys, side keys, shortcut keys, and any other special keys. The input unit 120 creates various key signals in association with user's instructions and delivers them to the control unit 160. Particularly, the input unit 120 according to an embodiment of this invention may create various input signals for a camera operation, depending on a user's input action. Specifically, the input unit 120 may create an input signal for activating the camera unit 170 and an input signal for setting environments, such as ISO sensitivity, shutter speed, booster or lamp, of the camera unit 170. Additionally, the input unit 120 may create a key input signal for selecting one of a plurality of virtual objects stored in the memory unit 150 and a key input signal for operating a shutter to obtain a merged preview image with a virtual object, and then may deliver them to the control unit 160.

The audio processing unit 130 outputs audio signals received from the RF unit 110 to a speaker (SPK) or transmits audio signals inputted from a microphone (MIC) to the RF unit 110, under the control of the control unit 160. Additionally, the audio processing unit 130 may output sound effects related to instructions to control the camera unit 170, such as sound effects of a shutter press or sound effects of an image storing. Also, when the camera unit 170 is activated, the audio processing unit 130 may inform a user of available functions of the camera unit 170.

The display unit 140 represents a variety of information on a screen in association with the operation of the mobile device 100, such as menu pages, data inputted by a user, function setting information, and the like. The display unit 140 may be formed of a liquid crystal display (LCD), an organic light emitting device (OLED), or any other displays usable in mobile devices. In some embodiment, the display unit 140 may be formed of a touch screen that operates as an input unit. The display unit 140 may output various images, such as a preview image obtained by the camera module 170, an image stored in the memory unit 150, or an image received from external entities, under the control of the control unit 160. Particularly, the display unit 140 according to an embodiment of this invention may output a selection page (i.e., a menu) for selecting at least one of virtual objects stored in the memory unit 150, a preview page for displaying a merged preview image overlapped with a selected virtual object according to an input signal from the input unit 120, or a storing page for saving a merged preview image when there is a shutter key input in the state of outputting a merged preview image. Such pages will be described in detail later.

The memory unit 150 stores a variety of programs required for the operation of the mobile device 100 and related data. The memory unit 150 may consist of a program region and a data region (not shown).

The program region may store an operating system (OS) for controlling general operations of the mobile device 100, applications required for playing multimedia contents, and the like. Particularly, the program region, according to an embodiment of this invention, may store a camera application for controlling the camera unit 170 and a virtual application for applying virtual objects to images. The virtual application may be included in the camera application, as a function to control variations of a preview object after a virtual object is selected. Alternatively, the virtual application may be designed independently of the camera application and loaded in the control unit 160 according to a user's selection. The virtual application may include a routine for composing a selection page which offers virtual objects stored in the memory unit 150 on the display unit 140 for a user's selection, a routine for composing a preview page which offers a merged preview image of a current preview image and a user's selected virtual object, a routine for temporarily storing a merged preview image in response to an input signal for taking a photograph (i.e., image capture), and a routine for storing a merged preview image in response to an input signal for storing.

The data region stores data, such as phonebook data, audio data, contents or user-related data. Typical such data is created while the mobile device 100 operates. Particularly, the data region according to an embodiment of this invention may store images obtained by activation of the camera unit 170, at least one virtual object, and/or at least one merged preview image with a virtual object.

The camera unit 170 is activated under the control of the control unit 160 and may support, in addition to normal camera functions, a function to obtain a merged preview image with a virtual object. The camera unit 170 may include a camera sensor that converts optical signal into electric signals, an image signal processor that converts analog video signals into digital video signals, and a digital signal processor that performs a given or known image processing (e.g., scaling, noise filtering, RGB signal conversion, etc.) of video signals received from the image signal processor in order to represent video signals on the display unit 160. The camera sensor may be formed of a CCD sensor or a CMOS sensor. The image signal processor may be designed as digital signal processor (DSP).

The control unit 160 controls general operations of the mobile device 100, the flow of signals between elements in the mobile device 100, data processing functions, and the like. Particularly, the control unit 160 according to an embodiment of this invention controls the camera unit 170, depending on input signals received from the input unit 120. Here, the control unit 160 may control a merged preview image output function which creates a merged preview image overlapped with a virtual object in response to a given input signal. For the above function, the control unit 160 may include a virtual object managing part 161 and a virtual object applying part 163, as shown in FIG. 2.

The virtual object managing part 161 retrieves a virtual object from the memory unit 150, at a user's request, and then outputs a retrieved virtual object to the display unit 140. Also, when a user selects a virtual object, the virtual object managing part 161 delivers a selected virtual object to the virtual object applying part 163. Additionally, the virtual object managing part 161 may receive a virtual object from external entities or create a virtual object.

Specifically, in order to apply various virtual objects to a preview image, a user of the mobile device 100 can receive a desired virtual object from other mobile devices or servers supporting virtual objects. Namely, a specific mobile device or server creates various kinds of virtual objects applicable to the mobile device 100 and allows the mobile device 100 to download them. Therefore, the mobile device 100 accessing such a mobile device or server can download a virtual object and store it in the memory unit 150. In this process, the virtual object managing part 161 may treat and store downloaded virtual objects as a single group, create a list of them, manage information about the images or icon representation of the images, and support the output of them (virtual objects or icon representations) to the display unit 140.

Additionally, the virtual object managing part 161 may support an edit function for the virtual objects. By activating a virtual object editor, a user of the mobile device 100 can create a new virtual object or adjust at least one of the range and effect of a merged preview image, which may be modified according to the position, size and attribute of a virtual object stored in the memory unit 150.

The virtual object applying part 163 receives information about a selected virtual object from the virtual object managing part 161 when a user selects a desired virtual object, and applies a received virtual object to a preview image obtained through the camera unit 170. In this process, the virtual object applying part 163 may detect the attribute of a virtual object and then modify at least one part of a preview image according to the attribute of the virtual object. Additionally, the virtual object applying part 163 may change the attribute of the virtual object. Namely, the virtual object applying part 163 may adjust at least one of a position, a size, an effect of an attribute and a number of an attribute of a virtual object in response to editing input signals, and then output a new merged preview image, in which a modified virtual object is applied to a preview image.

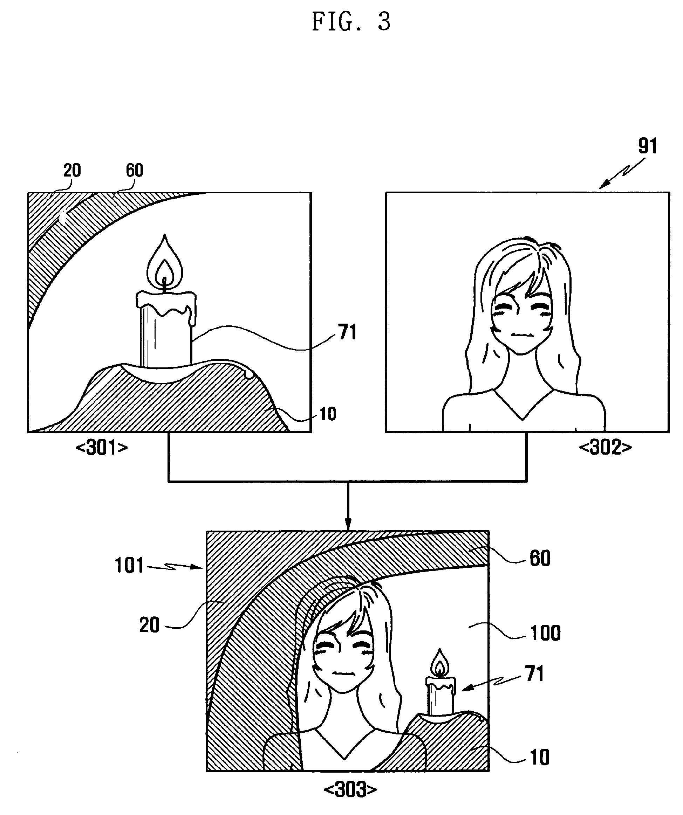

Now, a virtual object and its applied example will be described in detail with reference to FIG. 3.

FIG. 3 is a view illustrating an example of a merged preview image with a candlelight virtual object in accordance with an exemplary embodiment of the present invention.

Referring to FIG. 3, a screen view 301 shows a candlelight virtual object 71 which is stored in the memory unit 150, and a screen view 302 shows a preview image 91 of a focused target (e.g., a person) which is obtained according to activation of the camera unit 170. In particular, the candlelight virtual object 71 is defined with its virtual image and attribute. Specifically, a virtual image of the candlelight virtual object 71 may consist of a candle, the light produced by a candle, and a candlestick for holding a candle, each of which is defined with a specific area enclosed by a looped curve (not shown). Additionally, the attribute of the candlelight virtual object 71 may be a change in brightness which gives varying brightness to a specific area around a particular point of a virtual image. Namely, the candlelight virtual object 71 may be composed of a virtual image having a candle, light and a candlestick, and an attribute allowing a change in brightness according to distance from the position of the candlelight virtual object 71.

Meanwhile, the preview image 91 is an advance view composed of a focused target and its background under specific setting conditions, such as sensitivity, aperture, and shutter speed, of the camera unit 170. Namely, the preview image 91 is an actual image obtained depending on the setting conditions of the camera unit 170.

When a user selects the candlelight virtual object 71 stored in the memory unit 150 and then inputs a signal for applying a selected virtual object to a preview image obtained through the camera unit 170, the mobile device 100 outputs a merged preview image 101 by applying the candlelight virtual object 71 to the preview image 91 as shown in a screen view 303.

In the merged preview image 101, the candlelight virtual object 71 may be located near a lower right corner, while the preview image 91 remains unchanged in comparison with the aforesaid screen view 302. At this time, the attribute of the candlelight virtual object 71 is also applied. Namely, the mobile device 100 gradually reduces the brightness of the merged preview image 101 as the distance from the candlelight virtual object 71 increases. For example, if the brightest area is defined to have the brightness of 100, the mobile device 100 may apply the attribute to the merged preview image 101 such that the nearest area around the candlelight virtual object 71 may have the brightness of 100, the next areas may, for example, have the brightness of 60 and 20, respectively, and an area under the candlestick may have the brightness of 10. Although in this example a change in brightness is applied to respective individual areas, the mobile device 100 may also continuously change the brightness from the candlelight virtual object 71 in the merged preview image 101. Namely, the brightness in the merged preview image 101 is continuously reduced depending on the distance from the candlelight virtual object 71.

Meanwhile, the brightness attribute of the candlelight virtual object 71 may be determined at the time of designing virtual objects. Additionally, the areas changed in brightness and respective values of brightness may be modified in an edit process for virtual objects.

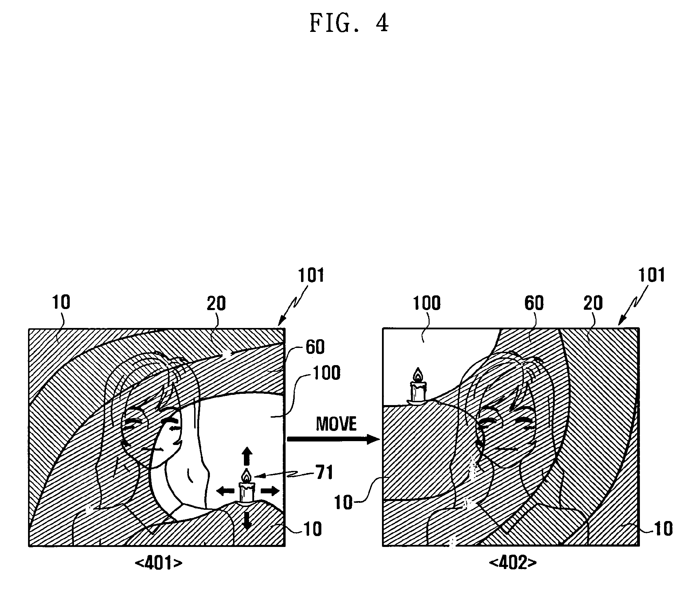

FIG. 4 is a view illustrating an applicable example of a candlelight virtual object shown in FIG. 3.

Referring to FIG. 4, a screen view 401 shows the merged preview image 101 produced by a combination of the candlelight virtual object 71 and the preview image 91 as earlier discussed in FIG. 3. At this time, a user may desire to change the position of the candlelight virtual object 71 and also select the candlelight virtual object 71 being displayed. In response to a user's selection input, the mobile device 100 may offer a graphical feedback, such as arrow-like indicators, to inform a user that the candlelight virtual object 71 is selected and ready for a change in position.

Thereafter, a user may move the candlelight virtual object 71 to any other desired position, for example, toward an upper left corner as shown in a screen view 402. Then, in response to a user's move input, the mobile device 100 may change the position of the candlelight virtual object 71 and output again the merged preview image 101 with the moved candlelight virtual object 71. In this process, the mobile device 100 may further vary the brightness according to the movement of the candlelight virtual object 71. Namely, the mobile device 100 may continuously output the merged preview image 101 with a change in brightness depending on a change in position of the candlelight virtual object 71. Alternatively, in order to reduce the processing burden, the mobile device 100 may not apply the attribute of the candlelight virtual object 71 to the merged preview image 101 until the candlelight virtual object 71 is completely moved.

Consequently, according as the candlelight virtual object 71 is changed in position as shown in a screen view 402, an area with brightness of 100 is changed to an upper left area around the candlelight virtual object 71. Additionally, the other areas with brightness of 60, 20 and 10 are also changed in position.

Meanwhile, although the above example uses a single candlelight virtual object 71, the present invention is not limited to this case. Alternatively, two or more candlelight virtual objects may be also used depending on a user's selection. Similarly, the size of each individual candlelight virtual object 71 may be varied depending on a user's input. Furthermore, the areas changed in brightness and respective values of brightness may be modified depending on a user's input.

Additionally, when two or more candlelight virtual objects 71 are used, the mobile device 100 may express a specific portion overlapped by each candlelight virtual object 71 as a brighter portion than a non-overlapped portion. For example, if two candlelight virtual objects 71 are used, and if a portion of the area with brightness of 60 is overlapped by two candlelight virtual objects 71, the brightness of an overlapped portion may be adjusted to 100 rather than 60. Here, the brightness of an overlapped portion may not exceed the brightest value 100 even though the arithmetic sum is 120. Also, the brightness of an overlapped portion may be determined to a certain value between 60 and 100. The brightness of an overlapped portion may be defined depending on a designer's intention when a virtual object is created, and may be modified depending on a user's input in an edit process. For example, the brightness may be combined using well-known mathematical formulations that may depend upon factors such as distance, logarithmic relationship, etc.

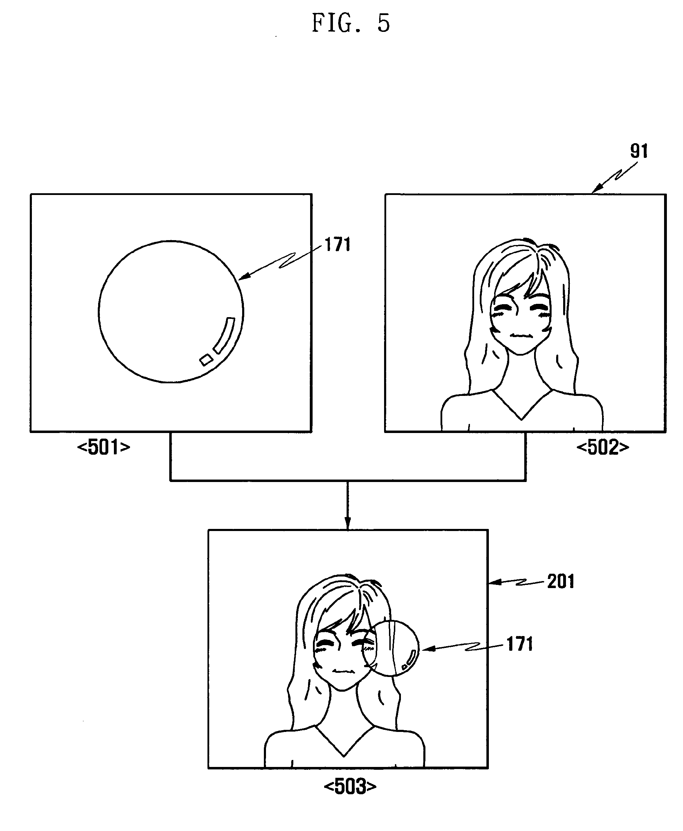

FIG. 5 is a view illustrating an example of a merged preview image with a bubble virtual object in accordance with another exemplary embodiment of the present invention.

Referring to FIG. 5, a screen view 501 shows a bubble virtual object 171 which is stored in the memory unit 150, and a screen view 502 shows the above-discussed preview image 91 of a focused target (e.g., a person) which is obtained according to activation of the camera unit 170. In particular, the bubble virtual object 171 is defined with the refractive index of light. Specifically, the inside and outside of the bubble virtual object 171 have different values in the refractive index of light, and further the inside of the bubble virtual object 171 has varying values in the refractive index of light according to inside positions.

The mobile device 100 may activate the camera unit 170 and also perform a merged preview image output function to apply a virtual object to a preview image. The screen view 502 shows the preview image 91 outputted on the display unit 140 by the activation of the camera unit 170. Also, the screen view 501 shows the bubble virtual 171 retrieved from the memory unit 150 and then outputted on the display unit 140 by a user's selection using a suitable menu or hot key. For this process, the mobile device 100 may offer a menu item for selecting virtual objects, and a list page for arranging icons or thumbnail images of virtual objects.

Meanwhile, the bubble virtual object 171 shown in the screen view 501 may have a virtual image which is defined with a specific area enclosed by a looped curve, and a refraction attribute which gives different values in the refractive index to the inside and outside of the virtual image. For example, if the outside area of the bubble virtual object 171 has the refractive index of 1, the inside area of the bubble virtual object 171 may have a greater or smaller value than that of the outside area. Additionally, the inside area of the bubble virtual object 171 may further have different values in refractive index varying according to positions. For example, the center of the bubble virtual object 171 may have a greater or smaller value in refractive index than that at the peripheries. Namely, the bubble virtual lens 171 may act as a concave lens or a convex lens.

By applying the bubble virtual object 171 shown in the screen view 501 to the preview image 91 shown in the screen view 502, the mobile device may create and output a merged preview image 201 as shown in a screen view 503. In the merged preview image 201, the bubble virtual object 171 distorts the underlying image. For example, in the merged preview image 201 shown in the screen view 503, the bubble virtual object 171 has a greater refractive index in the inside area and hence distorts the underlying image by acting as a convex lens. Like the aforesaid candlelight virtual object, the bubble virtual object 171 may be changed in position or size, and also a plurality of bubble virtual objects may be used together.

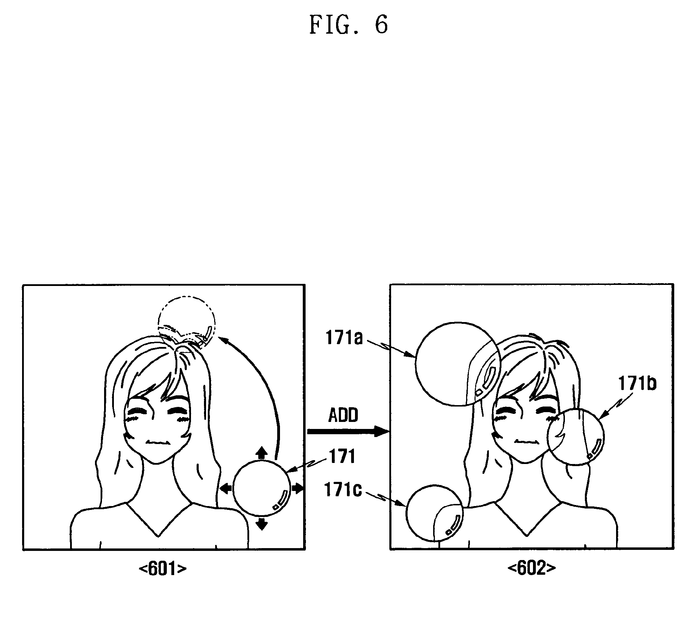

FIG. 6 is a view illustrating an applicable example of a bubble virtual object shown in FIG. 5.

Referring to FIG. 6, the mobile device 100 outputs the merged preview image as shown in a screen view 601 by applying a user's selected bubble virtual object 171 to a current preview image. When a user inputs a signal for changing the position of the bubble virtual object 171 through the input unit, the mobile device may support the movement of the bubble virtual object 171 being displayed. Here, in response to a user's input, the mobile device may offer a graphical feedback, such as arrow-like indicators to inform a user that the bubble virtual object 171 is selected and ready for a change in position. Namely, when the bubble virtual object 171 is selected by a user, four arrows may be displayed around the bubble virtual object 171 as shown in the screen view 601.

Thereafter, if a user moves the bubble virtual object 171 to any other desired position by using navigation keys, etc., the mobile device changes the position of the bubble virtual object 171 in response to input signals from the navigation keys and then outputs again the merged preview image with the moved bubble virtual object 171. While the bubble virtual object 171 is moved, the mobile device may modify continuously the preview image by applying in real time the attribute of the bubble virtual object 171 to the underlying image. Alternatively, considering the amount of data processing, the mobile device may not apply the attribute of the bubble virtual object 171 until the bubble virtual object 171 is completely moved. In the latter case, the mobile device applies the attribute of the bubble virtual object 171 to the preview image when there is no input signal from the navigation keys for a given time or when there is a specific input signal such as an 'OK' key input signal indicating a position move completion.

Meanwhile, a user may desire to apply a plurality of bubble virtual objects 171 to the merged preview image. For this, the mobile device may offer a menu option or key for adding the bubble virtual object 171 and then, if such a menu or key is activated, output an additional bubble virtual object to a given position. Furthermore, the mobile device may support a change in attribute of the bubble virtual object 171. Namely, when a user desires to change the size of the bubble virtual object 171, the mobile device may offer a menu item for a size modification and then change the size of the bubble virtual object 171 in response to an input signal from the input unit. According as the size is changed, the underlying image to which the attribute of the bubble virtual object 171 is applied is also changed.

When receiving an input signal for creating or adding bubble virtual objects, the mobile device outputs the first to third bubble virtual objects 171 a, 171b and 171c, for example, on the preview image as shown in a screen view 602. Additionally, when receiving an input signal for changing the size of each bubble virtual object, the mobile device outputs size-changed bubble virtual objects 171 a to 171c and then applies again their attributes to the respective underlying images.

As discussed heretofore, the mobile device according to embodiments of this invention supports virtual objects which can be applied in real time to a preview image obtained by the camera unit. If a user selects a specific one of virtual objects, the mobile device outputs a selected virtual object on a preview image and then, based on the attribute of a selected virtual object, modifies the preview image. Namely, the mobile device creates and outputs a merged preview image. Additionally, if there is an input signal for changing the position, size, number, attribute, etc. of a selected virtual object, the mobile device performs a suitable image processing in response to such an input signal and then outputs again the merged preview image.

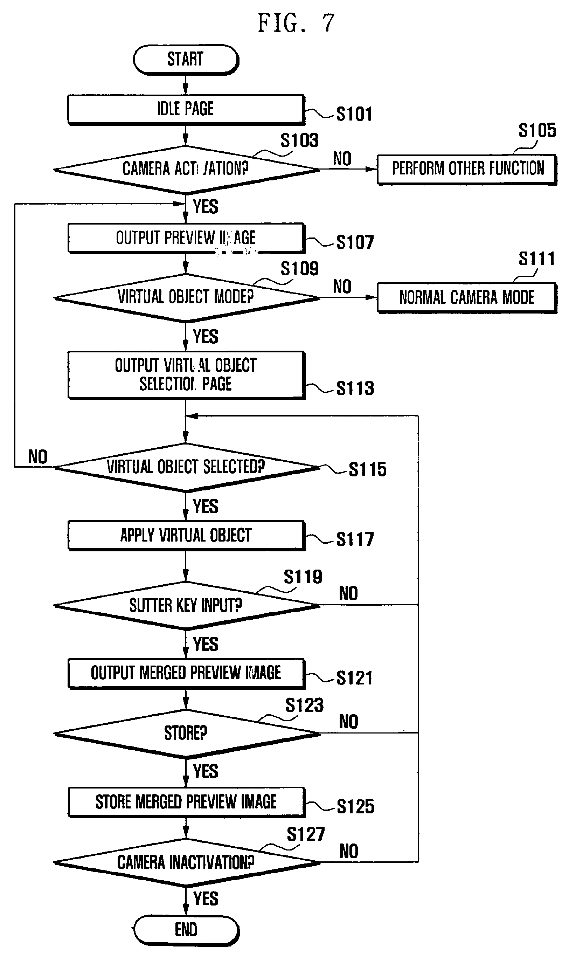

Now, an image processing method based on a virtual object will be described in detail with reference to FIG. 7.

FIG. 7 is a flow diagram illustrating an image processing method based on a virtual object in accordance with an exemplary embodiment of the present invention.

Referring to FIG. 7, after powered on and performing a default initialization, the mobile device controls the display unit to display a predefined idle screen (step S101).

Thereafter, the mobile device determines whether an input signal for camera activation is received (step S103). If any input signal for other functions such as playing a file, searching a file, dialing an outgoing call, receiving an incoming call, and the like is received, the mobile device performs the corresponding function in response to a received input signal (step S105).

If an input signal for camera activation is received, the mobile device activates the camera unit and also controls the display unit to display a preview image obtained in real time through camera sensors (step S107). Next, the mobile device determines whether a virtual object mode is selected (step S109). If a virtual object mode is not selected, the mobile device supports a camera operation in a normal mode (step S111).

If receiving an input signal for selecting a virtual object mode, the mobile device outputs a virtual object selection page to the display unit (step S113). Here, the mobile device may offer a suitable menu or hot key for selecting a virtual object mode, and may also output at least one virtual object or its icon or thumbnail image to the display unit in order for a user to select one of virtual objects stored in the memory unit.

Next, the mobile device determines whether a specific virtual object is selected (step S115). If there no additional input, the mobile device may remain in the step S113. If there is an input signal for canceling a virtual object mode without selecting a virtual object, the mobile device may return to the previous step S107.

If receiving an input signal for selecting a specific virtual object, the mobile device applies a selected virtual object to a preview image (step S117). Specifically, such a virtual object may be composed of a virtual image or icon placed on a certain position of a preview image, and attribute defined to modify at least parts of a preview image. If a specific virtual object is selected, the mobile device outputs a virtual image of a selected virtual object to a given or selected position of a preview image and also, based on the attribute of a selected virtual object, modifies at least parts of a preview image in accordance with the attributes of the selected virtual object Here, the mobile device supports a change in position of a selected virtual object and a further selection of other objects. For this process, the mobile device may offer a menu for changing the position of a selected virtual object, a menu for modifying at least one of the size and attribute of a selected virtual object, a menu for adding virtual objects with identical or different attributes, and the like.

Next, the mobile device determines whether an input signal of a shutter key is received (step S119). If there is no shutter key input, the mobile device returns to step S115 in order to alternatively select and/or add other virtual object. If receiving a shutter key input signal, the mobile device outputs a merged preview image to the display unit by applying the attributes of the at least one selected virtual object to a preview image (step S121).

And then, the mobile device determines whether an input signal for storing a merged preview image is received (step S123). If there is no input signal, the mobile device remains in the step S121 or returns to step S115. If receiving an input signal for storing, the mobile device stores a merged preview image with a selected virtual object (step S125). Then the mobile device determines whether an input signal for camera inactivation is received (step S127). If receiving any input signal other than camera inactivation, the mobile device returns to step S115.

In summary, the above-discussed image processing method based on a virtual object includes a step of selecting a virtual object, a step of creating a merged preview image by applying attributes of at least one selected virtual object to a preview image obtained by the camera unit, and a step of displaying a merged preview image on the display unit. Also, the mobile device may capture and store a merged preview image in response to user's further inputs.

Meanwhile, although in the above-discussed method a virtual object mode is selected in the step S109 after camera activation in the step S103, the present invention is not limited to the above case. In an alternative aspect of the invention, the mobile device may determine whether a virtual object mode is selected, without determining camera activation. If a virtual object mode is selected, the mobile device automatically activates the camera unit and then outputs a preview image.

Additionally, although in the above-discussed method a signal virtual object is selected, the present invention may also allow a selection of two or more virtual objects. If several virtual objects are selected, the mobile device detects the attributes of each virtual object and applies them to a preview image in order to create and output a merged preview image.

Meanwhile, although the above-discussed illustrative embodiments employ a candlelight virtual object and a bubble virtual object as examples of a virtual object, the present invention is not limited to such examples. For example, a flashlight virtual object for giving a brilliant flood of light to a limited area of a preview image, a wave virtual object for creating a disturbance effect to a preview image, and the like, may also employed for this invention. Therefore, a virtual object of this invention should be considered as something composed of a virtual image or icon in a specific form and its attribute capable of modifying at least parts of the underlying image.

Furthermore, although the above-discussed embodiments employ a preview image to which a virtual object is applied, images stored in the memory unit may be also used for the present invention.

Specifically, a user may select one of images stored in the memory unit and may also select a virtual object to be applied to a selected image in order to obtain a merged image. Therefore, the mobile device may offer menu pages for allowing a user to select a desired image and at least one virtual object in the memory unit. When a user selects an image and virtual object, the mobile device applies a selected virtual object to a selected image and thereby creates a merged image. At a user's request, such as merged image may be stored in the memory unit. Here, images stored in and retrieved from the memory unit may include pre-stored images, captured images obtained through the camera unit, and downloaded images received from external entities such as other mobile devices or servers.

The above-described methods according to the present invention can be realized in hardware or as software or computer code that can be stored in a recording medium such as a CD ROM, an RAM, a floppy disk, a hard disk, or a magneto-optical disk or downloaded over a network (i.e., The computer program can be provided from an external source which is electronically downloaded over a network, e.g., Internet, POTS), so that the methods described herein can be rendered in such software in the control unit 160 including a general purpose computer, or a special processor or in programmable or dedicated hardware, such as an ASIC or FPGA. As would be understood in the art, the control unit including the computer, the processor or the programmable hardware may further include memory components, e.g., RAM, ROM, Flash, etc. that may store or receive software or computer code that when accessed and executed by the computer, processor or hardware implement the processing methods described herein. The code when loaded into a general purpose computer transformed the general purpose computer into a special purpose computer that may in part be dedicated to the processing shown herein. In addition, the computer, processor or dedicated hardware may be composed of at least one of a single processor, a multi-processor, and a multi-core processor.

While this invention has been particularly shown and described with reference to an exemplary embodiment thereof, it will be understood by those skilled in the art that various changes in form and details may be made therein without departing from the scope of the invention as defined by the appended claims. It would be recognized that the reference signs of Rule 43(7) EPC used in the claims do not limit the scope of the claims.

## Claims

1. A method, operable in a control unit (160), for image processing based on a virtual object, the method **characterized in**:
selecting (S115) at least one virtual object (71), each of the at least one virtual object (71) including a virtual image and a modification attribute (10, 20, 60), the virtual image having a particular form and being placed on a specific underlying image (302), and the modification attribute allowing at least one part of the underlying image (302) to be modified;
creating a merged image (303) by locating the selected virtual object (71) on a specific position of the underlying image (302) and by modifying the parts of the underlying image (302) according to the modification attribute (10, 20. 60); and
outputting (S121) the merged image (303).

2. The method of claim 1, further comprising at least one of:
changing the position of the selected virtual object (71) in response to a suitable input signal;
creating a new merged image (402) by modifying the at least one part of the underlying image (302) in consideration of the changed position of the selected virtual object (71); and
changing at least one of the size and the modification attribute (10, 20, 60) of the selected virtual object (71).

3. The method of claim 2, further comprising at least one of:
changing the size of the virtual image of the selected virtual object (71) located on the underlying image (302) according to a change in size of the selected virtual object (71); and
modifying the underlying image (302) according to a change in attribute of the selected virtual object (71).

4. The method of claim 1, further comprising:
changing a number of the selected virtual object.

5. The method of claim 1, wherein the underlying image (302) includes a preview image displayable on a camera unit (170).

6. The method of claim 5, further comprising at least one of:
receiving (S119) an input signal of a shutter key for capturing a merged preview image in which the selected virtual object is applied to the preview image; and
storing (S125) the merged preview image.

7. The method of claim 1, wherein the virtual object includes at least one of:
a candlelight virtual object (71) having a virtual image and a modification attribute (10, 20, 60), the virtual image being formed of a candle and the light, and the modification attribute (10, 20, 60) varying brightness of the underlying image;
a bubble virtual object (171) having a virtual image enclosed by a looped curve, and a refraction attribute giving different values in the refractive index to the inside and outside of the virtual image;
a flashlight virtual object having a virtual image formed of a flashlight, and a modification attribute giving a brilliant flood of light to a limited area of the underlying image; and
a wave virtual object giving a disturbance effect to the underlying image.

8. The method of claim 1, wherein the selecting of the virtual object includes selecting at least two virtual objects having different modification attributes.

9. The method of claim 8, wherein the outputting of the merged image includes creating the merged image by simultaneously applying the different modification attributes to the underlying image and then outputting the merged image.

10. An apparatus (100) for image processing based on a virtual object (71), the apparatus **characterized by**:
a memory unit (150) configured to store at least one virtual object (71) each including a virtual image and a modification attribute (10, 20, 60), the virtual image having a particular form and being placed on a specific underlying image (302), and the modification attribute (10, 20, 60) allowing at least parts of the underlying image (302) to be modified;
a control unit (160) configured to create a merged image (303) by locating the selected virtual object (71) on a specific position of the underlying image (302) and by modifying the parts of the underlying image (302) according to the modification attribute (10, 20, 60), and to output the merged image (303);
an input unit (120) configured to create at least one of an input signal for selecting the virtual object (71) and an input signal for selecting the underlying image (302); and
a display unit (140) configured to display the merged image (303).

11. The apparatus of claim 10, wherein the input unit (120) is further configured to create at least one of:
an input signal for changing the position of the selected virtual object (71) in response to a suitable input signal;
an input signal for changing at least one of the size and the attribute (10, 20, 60) of the selected virtual object (71);
an input signal for changing the number of the selected virtual object (71); and
an input signal for further selecting other virtual objects.

12. The apparatus of claim 11, wherein the control unit (160) is further configured to create a new merged image (402) by applying at least one of an image of the selected virtual object (71) changed in position, an image of the selected virtual object (71) changed in size, an image of the selected virtual object (71) changed in number, and an image of the further selected virtual object (71), to the parts of the underlying image (302).

13. The apparatus of claim 11, wherein the control unit (160) is further configured to create the merged image by simultaneously applying different modification attributes of at least two virtual objects to the underlying image, and to output the merged image.

14. The apparatus of claim 10, wherein the virtual object includes at least one of:
a candlelight virtual object (71) having a virtual image and a modification attribute (10, 20, 60), the virtual image being formed of a candle and the light, and the modification attribute (10, 20, 60) varying brightness of the underlying image;
a bubble virtual object (171) having a virtual image enclosed by a looped curve, and a refraction attribute giving different values in the refractive index to the inside and outside of the virtual image;
a flashlight virtual object having a virtual image formed of a flashlight, and a modification attribute giving a brilliant flood of light to a limited area of the underlying image; and
a wave virtual object giving a disturbance effect to the underlying image.

15. The apparatus of claim 10, further comprising:
a camera unit (170) configured to obtain a preview image as the underlying image (302) in response to a suitable input signal.

## Patentansprüche

1. Verfahren, das in einer Steuereinheit (160) ablaufen kann, zur Bildverarbeitung auf der Basis eines virtuellen Objekts, wobei das Verfahren **gekennzeichnet ist durch**:
Auswählen (S115) von wenigstens einem virtuellen Objekt (71), wobei jedes der wenigstens einen virtuellen Objekte (71) ein virtuelles Bild und ein Modifikationsattribut (10, 20, 60) aufweist, wobei das virtuelle Bild eine bestimmte Form hat und auf einem speziellen zugrunde liegenden Bild (302) liegt, und wobei es das Modifikationsattribut zulässt, dass wenigstens ein Teil des zugrunde liegenden Bildes (302) modifiziert wird;
Erzeugen eines zusammengesetzten Bildes (303) **durch** Platzieren des gewählten virtuellen Objekts (71) in einer bestimmten Position des zugrunde liegenden Bildes (302) und **durch** Modifizieren der Teile des zugrunde liegenden Bildes (302) gemäß dem Modifikationsattribut (10, 20, 60); und
Ausgeben (S121) des zusammengesetzten Bildes (303).

2. Verfahren nach Anspruch 1, das ferner wenigstens einen der folgenden Schritte beinhaltet:
Ändern der Position des gewählten virtuellen Objekts (71) als Reaktion auf ein geeignetes Eingangssignal;
Erzeugen eines neuen zusammengesetzten Bildes (402) durch Modifizieren des wenigstens einen Teils des zugrunde liegenden Bildes (302) unter Berücksichtigung der geänderten Position des gewählten virtuellen Objekts (71); und
Ändern der Größe und/oder des Modifikationsattributs (10, 20, 60) des gewählten virtuellen Objekts (71).

3. Verfahren nach Anspruch 2, das ferner wenigstens einen der folgenden Schritte beinhaltet:
Ändern der Größe des virtuellen Bildes des gewählten virtuellen Objekts (71), das sich auf dem zugrunde liegenden Bild (302) befindet, gemäß einer Änderung der Größe des gewählten virtuellen Objekts (71); und
Modifizieren des zugrunde liegenden Bildes (302) gemäß einer Änderung des Attributs des gewählten virtuellen Objekts (71).

4. Verfahren nach Anspruch 1, das ferner das Ändern einer Zahl des gewählten virtuellen Objekts beinhaltet.

5. Verfahren nach Anspruch 1, wobei das zugrunde liegende Bild (302) ein Preview-Bild beinhaltet, das auf einer Kameraeinheit (170) angezeigt werden kann.

6. Verfahren nach Anspruch 5, das ferner wenigstens einen der folgenden Schritte beinhaltet:
Empfangen (S119) eines Eingangssignals einer Verschlusstaste zum Aufnehmen eines zusammengesetzten Preview-Bildes, in dem das gewählte virtuelle Objekt auf das Preview-Bild angewendet wird; und
Speichern (S125) des zusammengesetzten Preview-Bildes.

7. Verfahren nach Anspruch 1, wobei das virtuelle Objekt wenigstens eines der Folgenden umfasst:
ein virtuelles Kerzenlichtobjekt (71) mit einem virtuellen Bild und einem Modifikationsattribut (10, 20, 60), wobei das virtuelle Bild aus einer Kerze und dem Licht gebildet ist und wobei das Modifikationsattribut (10, 20, 60) die Helligkeit des zugrunde liegenden Bildes variiert;
ein virtuelles Blasenobjekt (171) mit einem virtuellen Bild, das von einer kreisförmigen Kurve umschlossen ist, und ein Beugungsattribut, das unterschiedliche Werte im Beugungsindex zur Innenseite und zur Außenseite des virtuellen Bildes gibt;
ein virtuelles Blitzlichtobjekt mit einem virtuellen Bild, das aus einem Blitzlicht gebildet ist, und einem Modifikationsattribut, das einen begrenzten Bereich des zugrunde liegenden Bildes in strahlendes Licht taucht; und
ein virtuelles Wellenobjekt, das eine Störwirkung auf das zugrunde liegende Bild ausübt.

8. Verfahren nach Anspruch 1, wobei das Auswählen des virtuellen Objekts das Auswählen von wenigstens zwei virtuellen Objekten mit unterschiedlichen Modifikationsattributen beinhaltet.

9. Verfahren nach Anspruch 8, wobei das Ausgeben des zusammengesetzten Bildes das Erzeugen des zusammengesetzten Bildes durch gleichzeitiges Anwenden der verschiedenen Modifikationsattribute auf das zugrunde liegende Bild und dann Ausgeben des zusammengesetzten Bildes beinhaltet.

10. Vorrichtung (100) zur Bildverarbeitung auf der Basis eines virtuellen Objekts (71), wobei die Vorrichtung **gekennzeichnet ist durch**:
eine Speichereinheit (150), die zum Speichern von wenigstens einem virtuellen Objekt (71) konfiguriert ist, die jeweils ein virtuelles Bild und ein Modifikationsattribut (10, 20, 60) aufweisen, wobei das virtuelle Bild eine bestimmte Form hat und auf einem bestimmten zugrunde liegenden Bild (302) liegt, und wobei es das Modifikationsattribut (10, 20, 60) zulässt, dass wenigstens Teile des zugrunde liegenden Bildes (302) modifiziert werden;
eine Steuereinheit (160), die zum Erzeugen eines zusammengesetzten Bildes (303) konfiguriert ist, indem sie das ausgewählte virtuelle Objekt (71) in eine bestimmte Position des zugrunde liegenden Bildes (302) legt und Teile des zugrunde liegenden Bildes (302) gemäß dem Modifikationsattribut (10, 20, 60) modifiziert und das zusammengesetzte Bild (303) ausgibt;
eine Eingabeeinheit (120), die zum Erzeugen eines Eingangssignals zum Auswählen des virtuellen Objekts (71) und/oder eines Eingangssignals zum Auswählen des zugrunde liegenden Bildes (302) konfiguriert ist; und
eine Anzeigeeinheit (140), die zum Anzeigen des zusammengesetzten Bildes (303) konfiguriert ist.

11. Vorrichtung nach Anspruch 10, wobei die Eingabeeinheit (120) ferner so konfiguriert ist, dass sie wenigstens eines der Folgenden erzeugt:
ein Eingangssignal zum Ändern der Position des gewählten virtuellen Bildes (71) als Reaktion auf ein geeignetes Eingangssignal;
ein Eingangssignal zum Ändern der Größe und/oder des Attributs (10, 20, 60) des gewählten virtuellen Objekts (71);
ein Eingangssignal zum Ändern der Zahl des gewählten virtuellen Objekts (71); und
ein Eingangssignal zum weiteren Auswählen anderer virtueller Objekte.

12. Vorrichtung nach Anspruch 11, wobei die Steuereinheit (160) ferner so konfiguriert ist, dass sie ein neues zusammengesetztes Bild (402) erzeugt, indem sie wenigstens eines der Folgenden auf die Teile des zugrunde liegenden Bildes (302) anwendet: ein Bild des gewählten virtuellen Objekts (71), dessen Position sich geändert hat, ein Bild des gewählten virtuellen Objekts (71), dessen Größe sich geändert hat, ein Bild des gewählten virtuellen Objekts (71), dessen Zahl sich geändert hat, und ein Bild des weiteren gewählten virtuellen Objekts (71).

13. Vorrichtung nach Anspruch 11, wobei die Steuereinheit (160) ferner zum Erzeugen des zusammengesetzten Bildes konfiguriert ist, indem sie gleichzeitig verschiedene Modifikationsattribute von wenigstens zwei virtuellen Objekten auf das zugrunde liegende Bild anwendet und das zusammengesetzte Bild ausgibt.

14. Vorrichtung nach Anspruch 10, wobei das virtuelle Objekt wenigstens eines der Folgenden beinhaltet:
ein virtuelles Kerzenlichtobjekt (71) mit einem virtuellen Bild und einem Modifikationsattribut (10, 20, 60), wobei das virtuelle Bild aus einer Kerze und dem Licht gebildet ist und wobei das Modifikationsattribut (10, 20, 60) die Helligkeit des zugrunde liegenden Bildes variiert;
ein virtuelles Blasenobjekt (171) mit einem virtuellen Bild, das von einer kreisförmigen Kurve umgeben ist, und mit einem Beugungsattribut, das unterschiedliche Werte im Beugungsindex zur Innenseite und zur Außenseite des virtuellen Bildes gibt;
ein virtuelles Blitzlichtobjekt mit einem virtuellen Bild, das aus einem Blitzlicht gebildet ist, und einem Modifikationsattribut, das einen begrenzten Bereich des zugrunde liegenden Bildes in ein strahlendes Licht taucht; und
ein virtuelles Wellenobjekt, das einen Störeffekt auf das zugrunde liegende Bild anwendet.

15. Vorrichtung nach Anspruch 10, die ferner Folgendes umfasst:
eine Kameraeinheit (170), die zum Gewinnen eines Preview-Bildes als das zugrunde liegende Bild (302) als Reaktion auf ein geeignetes Eingangssignal konfiguriert ist.

## Revendications

1. Procédé, exploitable dans une unité de commande (160), pour un traitement d'image fondé sur un objet virtuel, le procédé étant **caractérisé par** les opérations consistant à :
sélectionner (S115) au moins un objet virtuel (71), chaque ledit au moins un objet virtuel (71) comportant une image virtuelle et un attribut de modification (10, 20, 60), l'image virtuelle possédant une forme particulière et étant placée sur une image sous-jacente spécifique (302), et l'attribut de modification permettant d'effectuer la modification d'au moins une partie de l'image sous-jacente (302) ;
créer une image fusionnée (303) suite au positionnement de l'objet virtuel sélectionné (71) sur une position spécifique de l'image sous-jacente (302) et suite à la modification des parties de l'image sous-jacente (302) conformément à l'attribut de modification (10, 20, 60) ; et
produire (S121) l'image fusionnée (303).

2. Procédé selon la revendication 1, comprenant en outre l'une au moins des opérations consistant à :
changer la position de l'objet virtuel sélectionné (71) en réaction à un signal d'entrée approprié ;
créer une nouvelle image fusionnée (402) suite à la modification de ladite au moins une partie de l'image sous-jacente (302) compte tenu de la position changée de l'objet virtuel sélectionné (71) ; et
changer au moins l'un des éléments suivants, à savoir la taille et l'attribut de modification (10, 20, 60) de l'objet virtuel sélectionné (71).

3. Procédé selon la revendication 2, comprenant en outre l'une au moins des opérations consistant à :
changer la taille de l'image virtuelle de l'objet virtuel sélectionné (71) positionné sur l'image sous-jacente (302) conformément à un changement en termes de taille de l'objet virtuel sélectionné (71) ; et
modifier l'image sous-jacente (302), conformément à un changement en termes d'attribut de l'objet virtuel sélectionné (71).

4. Procédé selon la revendication 1, comprenant en outre l'opération consistant à :
changer un nombre de l'objet virtuel sélectionné.

5. Procédé selon la revendication 1, l'image sous-jacente (302) englobant un aperçu de l'image affichable sur une unité caméra (170).

6. Procédé selon la revendication 5, comprenant en outre l'une au moins des opérations consistant à :
recevoir (S119) un signal d'entrée d'une clé d'obturateur pour saisir un aperçu d'image fusionnée dans lequel l'objet virtuel sélectionné est appliqué à l'aperçu d'image ; et
stocker (S125) l'aperçu d'image fusionnée.

7. Procédé selon la revendication 1, l'objet virtuel englobant au moins l'un des objets virtuels suivants :
un objet virtuel de lumière de bougie (71) possédant une image virtuelle et un attribut de modification (10, 20, 60), l'image virtuelle étant constituée d'une bougie et de lumière, et l'attribut de modification (10, 20, 60) permettant de faire varier la luminosité de l'image sous-jacente ;
un objet virtuel de bulle (171) possédant une image virtuelle entourée d'une courbe en boucle, et un attribut de réfraction donnant différentes valeurs de l'indice de réfraction pour l'espace interne et l'espace externe de l'image virtuelle ;
un objet virtuel de lumière clignotante possédant une image virtuelle composée d'une lumière clignotante, et un attribut de modification donnant un flot de lumière brillante à une zone limitée de l'image sous-jacente ; et
un objet virtuel de vague donnant un effet de perturbation à l'image sous-jacente.

8. Procédé selon la revendication 1, la sélection de l'objet virtuel englobant la sélection d'au moins deux objets virtuels ayant des attributs de modification différents.

9. Procédé selon la revendication 8, la production de l'image fusionnée englobant la création de l'image fusionnée suite à l'application simultanée des différents attributs de modification à l'image sous-jacente, et ensuite la production de l'image fusionnée.

10. Appareil (100) destiné à un traitement d'image fondé sur un objet virtuel (71), l'appareil étant **caractérisé par** :
une unité mémoire (150) configurée pour stocker au moins un objet virtuel (71), chacun englobant une image virtuelle et un attribut de modification (10, 20, 60), l'image virtuelle possédant une forme particulière et étant placée sur une image sous-jacente spécifique (302), et l'attribut de modification (10, 20, 60) permettant d'effectuer la modification d'au moins certaines parties de l'image sous-jacente (302) ;
une unité de commande (160) configurée pour créer une image fusionnée (303) suite au positionnement de l'objet virtuel sélectionné (71) sur une position spécifique de l'image sous-jacente (302) et suite à la modification des parties de l'image sous-jacente (302) conformément à l'attribut de modification (10, 20, 60), et pour produire l'image fusionnée (303) ;
une unité d'entrée (120) configurée pour créer au moins l'un des signaux suivants, à savoir un signal d'entrée pour sélectionner l'objet virtuel (71) et un signal d'entrée pour sélectionner l'image sous-jacente (302) ; et
une unité d'affichage (140) configurée pour afficher l'image fusionnée (303).

11. Appareil selon la revendication 10, l'unité d'entrée (120) étant configurée en outre pour créer au moins l'un des signaux suivants, à savoir :
un signal d'entrée pour changer la position de l'objet virtuel sélectionné (71) en réaction à un signal d'entrée approprié ;
un signal d'entrée pour changer au moins l'un des éléments suivants, à savoir la taille et l'attribut (10, 20, 60) de l'objet virtuel sélectionné (71) ;
un signal d'entrée pour changer le nombre de l'objet virtuel sélectionné (71) ; et
un signal d'entrée pour sélectionner en outre d'autres objets virtuels.

12. Appareil selon la revendication 11, l'unité de commande (160) étant configurée en outre pour créer une nouvelle image fusionnée (402) suite à l'application aux parties de l'image sous-jacente (302) de l'une au moins des images suivantes, à savoir une image de l'objet virtuel sélectionné (71) dont la position a changé, une image de l'objet virtuel sélectionné (71) dont la taille a changé, une image de l'objet virtuel sélectionné (71) dont le nombre a changé, et une image de l'objet virtuel supplémentaire ayant été sélectionné (71).

13. Appareil selon la revendication 11, l'unité de commande (160) étant configurée en outre pour créer l'image fusionnée suite à l'application simultanée d'attributs de modification différents d'au moins deux objets virtuels à l'image sous-jacente, et pour produire l'image fusionnée.

14. Appareil selon la revendication 10, l'objet virtuel comportant au moins l'un des objets virtuels suivants :
un objet virtuel de lumière de bougie (71) possédant une image virtuelle et un attribut de modification (10, 20, 60), l'image virtuelle étant constituée d'une bougie et de lumière, et l'attribut de modification (10, 20, 60) permettant de faire varier la luminosité de l'image sous-jacente ;
un objet virtuel de bulle (171) possédant une image virtuelle entourée d'une courbe en boucle, et un attribut de réfraction donnant différentes valeurs de l'indice de réfraction pour l'espace interne et l'espace externe de l'image virtuelle ;
un objet virtuel de lumière clignotante possédant une image virtuelle composée d'une lumière clignotante, et un attribut de modification donnant un flot de lumière brillante à une zone limitée de l'image sous-jacente ; et
un objet virtuel de vague donnant un effet de perturbation à l'image sous-jacente.

15. Appareil selon la revendication 10, comprenant en outre :
une unité caméra (170) configurée pour obtenir un aperçu d'image en tant qu'image sous-jacente (302) en réaction à un signal d'entrée approprié.
